# EUROPEAN PATENT SPECIFICATION

(11) **EP 1 956 260 B1**
(45) Date of publication and mention of the grant of the patent: **01.12.2010**
(21) Application number: 07270009.9
(22) Date of filing: 06.02.2007
(51) Int. Cl.: F16D 43/284, B60K 17/16, F16D 48/02

(54) **A hydraulically operable coupling**
Hydraulisch betätigbare Kupplung
Embrayage à commande hydraulique

(43) Date of publication of application: 13.08.2008
(73) Proprietor: Ford Global Technologies, LLC, Dearborn, MI 48126 (US); Countytrac Limited, Ashford, Kent TN23 1EW (GB)
(72) Inventor: May, Eric, Kent ME10 2SZ (GB)
(74) Representative: Grunfeld, David Peter

(56) References cited:
- WO-A-03/095256
- DE-A1- 10 028 861
- GB-A- 2 245 237
- GB-A- 2 257 487
- US-A1- 2003 188 949

## Description

This invention relates to a hydraulically operable coupling suitable for use in vehicle transmission assemblies and in particular but not exclusively to vehicle transmission assemblies for four wheel drive vehicles.

Four wheel drive vehicles normally operate in two wheel drive (2WD) and have part time alternative drive wheels that are controlled to operate when four wheel drive (4WD) is necessary.

One conventional method of operation is a manual shift operated by the vehicle driver between 2WD and 4WD and this is normally achieved by means of a second gear stick located in the vehicle drive compartment.

Another method of operation is for the vehicle to be provided with electronic and hydraulic sensors and controls which automatically split the torque output from the engine so as to supply torque to the driven wheels based on interrogation of the sensors by the control system.

In WO 03/095256 the present applicant describes a vehicle transmission system in which a normally 2WD drive train also drives the alternative wheels under particular conditions. The control is purely mechanical having a hydraulically operable clutch of the type described in US-The clutch described in US-A-5310388 is a multi-plate friction clutch located in a housing containing transmission fluid and the clutch plates are clamped together by a hydraulic piston which is actuated by hydraulic pressure generated by pumped transmission fluid.

The volume of pumped fluid and hence the clamping pressure on the clutch plates is related to the rotational speed difference between the housing and the output shaft which in turn is related to the rotational speed of the normally driven wheels (2WD) and the rotational speed of the alternative drive wheels in 4WD. For example, if the driven wheels spin then the speed differential between the normally driven and alternatively driven wheels triggers the system to engage the alternative wheels.

A problem with purely mechanical all wheel drive systems arises during normal steering of a vehicle when the driven road wheels across an axle rotate at different speeds. A further problem relates to the change in viscosity of the clutch operating fluid as the vehicle warms after a cold start.

The present invention provides an improved vehicle final drive assembly which ameliorates the above problems.

According to a first aspect of the present invention there is provided a transmission coupling having a rotary input and at least one rotary output connected to the input through clutch means located within a casing, the clutch means being operated by a hydraulic actuator having hydraulic fluid thereto delivered by a pump operated by a speed differential between said input and outputs, and valve means controlling fluid flow through the actuator and comprising a first valve controlling fluid flow into the actuator and which is biased to a closed condition, with a second valve controlling fluid flow from the actuator and which is biased to an open condition, each valve being responsive to hydraulic pressure for the opening and closing thereof with the first valve opening before the second valve closes, when the viscosity of the fluid is above a predetermined value.

The first valve is operable to dump pressurized hydraulic fluid to sump or drain above a first predetermined hydraulic pressure and the second valve is operable to dump pressurized hydraulic fluid to sump or drain when below a second predetermined hydraulic pressure and prevents or chokes the flow of fluid to drain above said pressure.

The hydraulic actuator comprises an annular cylinder having an annular piston reciprocable within the cylinder and the first valve is located in a wall of the cylinder and the second valve is located in a wall of the piston.

The first valve comprises a piston slidable within a bore having an inlet passageway connected to the pump and outlet passageways connected to drain, the piston preventing flow between the inlet and outlet passageways when in the closed condition, there being at least one passageway through the piston to permit the flow of hydraulic fluid into the actuator. The piston has an end face which closes off the inlet passageway from the outlet passageways

The second valve may comprise a bore and piston with passageways therein to permit the flow of hydraulic fluid therethrough unless said piston and bore co-operate to close the passageways.

Preferably, the second valve comprises a stepped diameter piston housed in a stepped diameter bore, the passageways comprising axial passageways in the larger diameter portion of the piston and both axial and radial passageways in the smaller diameter portion of the piston, and flow through the passageways is closed by the wall of the smaller diameter portion of the bore.

The casing acts as the rotary input and may be caused to rotate by means of an input shaft having a pinion thereon which engages a ring gear on the casing.

The clutch means preferably comprises a multi-plate friction clutch and the hydraulic pressure determines the clamping load on the clutch plates.

The multi-plate clutch comprises a stack of annular friction plates having alternate plates rotationally fast with the casing and output shaft through their outer and inner peripheries respectively. The casing becomes rotationally fast with said output shaft when the clutch plates are compressed by a hydraulic actuator. The actuator piston is actuated by hydraulic pressure generated by a pump operated by differential rotational speed between the casing and output shaft.

A second aspect of the invention provides a vehicle final drive assembly operable between a pair of wheels across an axle and comprising an input shaft, a pair of transmission couplings according to the first aspect of the invention, the two casings of which are rotatably connected in parallel to the input shaft, each coupling having its output shaft rotatably connected to said input shaft through the clutch means and in use driving a respective wheel.

Preferably the two casings are interconnected by a cross shaft and the input shaft engages with one of said casings.

According to another aspect of the invention there is provided a transmission assembly for a motor vehicle and which includes a change speed transmission having an input shaft connectable to a vehicle engine, and a transmission main output shaft connected to a primary drive axle, and a final drive assembly according to a second aspect of the invention for a secondary drive axle.

The final drive assembly is arranged with the two hydraulically operated couplings being spaced apart and located one on each side of the transmission assembly, preferably either side of the bell housing.

A further aspect of the invention provides a motor vehicle having a final drive assembly according to the first aspect of the invention, driveably connected to either of a pair of front wheels or a pair of rear wheels not being on the primary drive axle.

Yet another aspect of the invention provides that a rotary transmission coupling having a rotary input and at least one rotary output connected through clutch means located within a casing, the clutch means being operable by a hydraulic actuator comprising a cylinder and piston, the actuator being responsive to hydraulic pressure generated by a pump operated by the rotational speed differential between said input and said output, and a valve means housed in a wall of the piston is also responsive to the hydraulic pressure to permit actuation of the clutch means above a predetermined hydraulic pressure.

The invention will be described by way of example and with reference to the accompanying drawings in which:
- Fig. 1: is schematic view of a motor vehicle having a final drive assembly and transmission assembly having a coupling according to the present invention,
- Fig.2: is a section through a coupling as is used in the final drive assembly of Fig. 1,
- Fig.3: is a section through the cylinder and piston used in the coupling in Fig 2,
- Fig.4: is an exploded isometric view of the cylinder and piston showing the two valves, and
- Fig.5: is an enlarged section showing the oil flow valve in a closed condition.

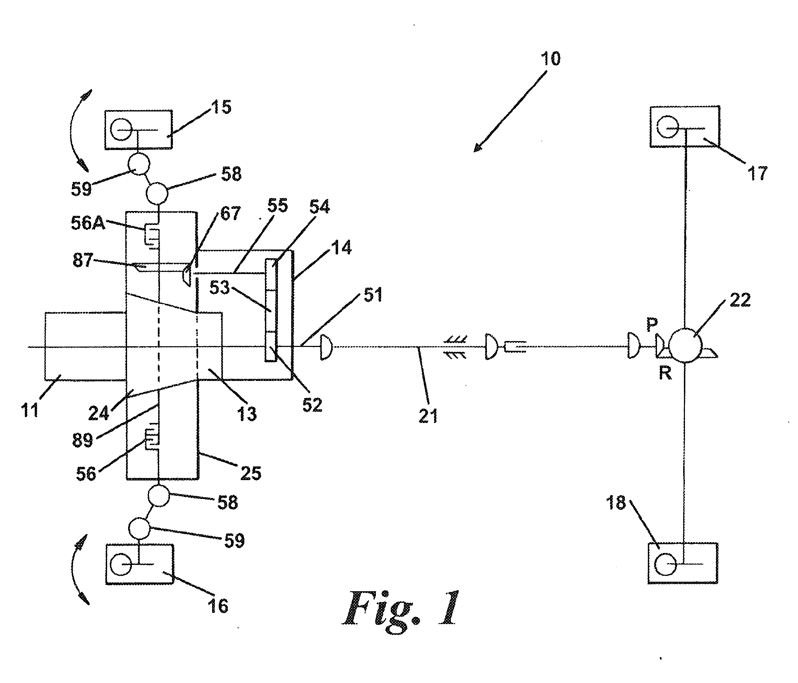

With reference to Fig.1, there is shown a motor vehicle 10 having an engine 11 arranged longitudinally of the vehicle. A transmission assembly 13 is mounted on the rear of the engine and includes a final drive assembly 14 which drives the front wheels 15 and 16, and the rear wheels 17 and 18. The primary drive is to the rear wheels 17 & 18 which are driven by the transmission main shaft 51 via a conventional drive shaft 21 and differential unit 22 having the typical ring gear R and pinion P.

A secondary drive for the front wheel 15 & 16 is taken off the main transmission shaft 51 via gears 52, 53, 54. The gear 54 drives an input shaft 55 for the secondary final drive assembly. The drive shaft 55 is connected in parallel to a pair of hydraulically operated couplings 56 which are in turn connected to respective wheels 15 or 16 through constant velocity joints 58 & 59.

The transmission assembly 13 is described in detail in WO 03/095256, the contents of which are hereby incorporated into the present description and will be described only in such detail as is necessary for an understanding of the present invention. The assembly 13 houses a plurality of change speed gears, as is well known, having a power input shaft which in use engages a drive coupling (not shown), typically a friction clutch, mounted on the rear of the engine 11 and enclosed in bell housing 24. The change speed gears drive the transmission main drive shaft 51 extending rearwardly from the transmission assembly.

The secondary drive to the front wheels 15 & 16 is substantially located in a final drive housing 25 which in turn is mounted to the transmission assembly 13. The final drive assembly 14 and the housing 25 are arranged so as to have a particular shape and configuration within the vehicle engine compartment so as to avoid other components mounted on the engine or within the engine compartment.

The main drive shaft 51 connects with the secondary drive input shaft 55 as previously described. The lower portion of the input shaft 55 has a pinion gear 67 thereon which is drivably connected to a pair of hydraulically operated couplings 56. The couplings 56 are mounted in the final drive housing 25 which extends across the front lower portion of the transmission assembly 13 and bell housing 24. The housing 25 is suitably sealed and contains hydraulic fluid for operation of the hydraulically operated couplings 56.

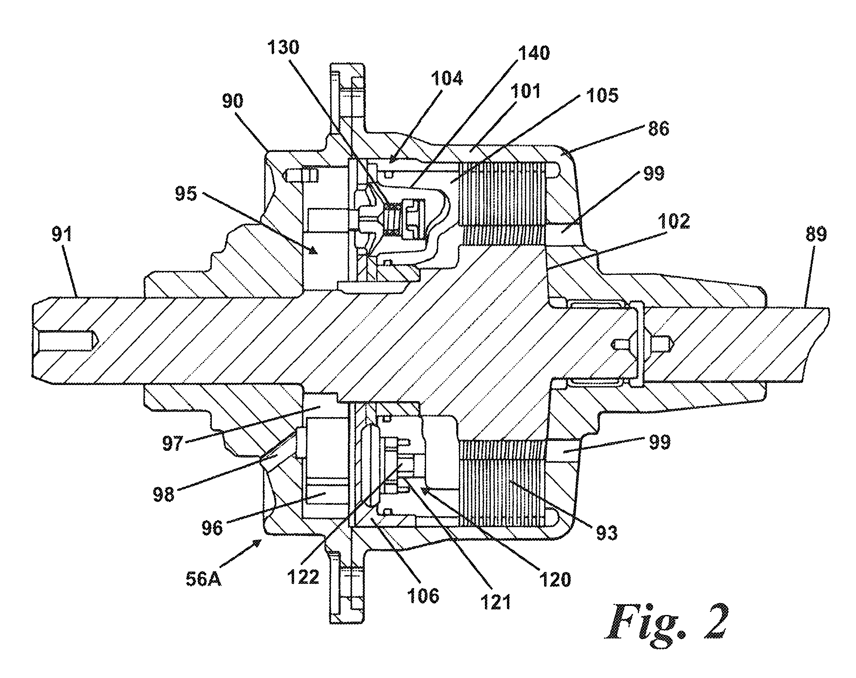

Referring also to Fig. 2, the two couplings 56 are mounted for coaxial rotation in the housing 25 on bearings (not shown). Each coupling 56 has a casing 86 of hollow construction and one coupling 56A has a bevel gear ring 87 extending around its outer surface which meshes with the pinion 67 to form a differential.

The casings 86 of the two couplings are mounted in the housing 25 by bearings (not shown) so that rotation of the shaft 55 and pinion 67 causes the casing 86 of coupling 56A to rotate. The casing 86 of coupling 56A is connected to a similar casing 86 of the second hydraulically operated coupling 56 by a coaxial cross shaft 89 so that the pinion 67 drives both couplings in parallel. The two couplings 56 drive respective coaxial half shafts 91 which are in turn connected to the wheels 15 and 16 through constant velocity joints 58, 59.

The hydraulically operated couplings 56 are of similar construction and therefore only coupling 56A will be described in detail, the other coupling 56 operating in a similar manner. The casing 86 comprises a cover 90 and a hollow cylindrical housing 101 enclosing a multi-plate friction clutch 93 operable in hydraulic fluid. The multi-plate clutch 93, as is well known, comprises a stack of annular friction plates having alternate plates rotationally fast with the casing 86, or clutch hub 102, through their outer and inner peripheries respectively. The hub 102 is rotationally fast with the half shaft 91.

The casing 86 becomes rotationally fast with the half shaft 91 when the clutch 93 is compressed by a hydraulic actuator 104. The hydraulic actuator 104 is actuated by hydraulic pressure generated by a bi-directional oil pump 95. The oil pump 95 comprises a stator 96 mounted in the cover 90 for eccentric rotation relative to a multi-lobed rotor 97 mounted on the half shaft 91. Hydraulic fluid in the housing 25 enters the pump 95 via apertures 98 in the casing cover 90. Fluid exits the casing 86 via outlets 99.

The hydraulic pressure generated by the pump 95 operates the actuator 104, comprising an annular cylinder 106 and a annular piston 105 reciprocable within the cylinder 106, to cause engagement of the clutch when there is relative rotational movement between the half shaft 91 and the casing 86. A more detailed explanation of the operation of the couplings is given in US 5310 388.

When a vehicle is driving normally along a highway, the primary drive is through the differential 22 and back axle. Since the front wheel half shafts 91 are rotating at the same speed as the casings 86 there is essentially no drive through the front wheels 15 & 16. If in a particular situation, the rear wheels 17, 18 slip causing via shaft 55 a difference in rotational speed between a half shaft 91 and its respective casing 86, then the oil pump 95 operates to develop sufficient pressure actuating the piston 105 to clamp the friction clutch 93, thereby transmitting drive from a casing 86 to a respective wheel. The drive is supplied to each wheel completely independently of the other wheel across the front axle.

However, if the vehicle is turning and the differential rotation is due to the turning action it is undesirable for the piston 105 to operate the clutch 93. In order to prevent operation of the clutch 93 in such circumstances a hydraulic pressure control valve 120 is provided in a wall of the piston 105 to allow pressurized fluid to bleed away from the actuator 104 when the fluid pressure is below a predetermined pressure.

The operation of the control valve 120 is dependant upon both the differential speed of rotation within the pump 95 and on the viscosity of the hydraulic fluid. If the viscosity is high then the valve 120 may close at a lower than desirable rotational speed differential.

The present invention therefore provides a second valve 140 which acts to compensate for changes in viscosity in the hydraulic fluid and ameliorate wind up between the front and rear drive axles of a four wheel drive vehicle. This viscosity compensation (VC) valve 140 is arranged upstream of the pressure control valve 120 and is located in the rear wall of the cylinder 106, diagonally opposite to the pressure control valve 120. Fluid from the pump 95 flows through the VC valve 140, before acting on the pressure valve 120.

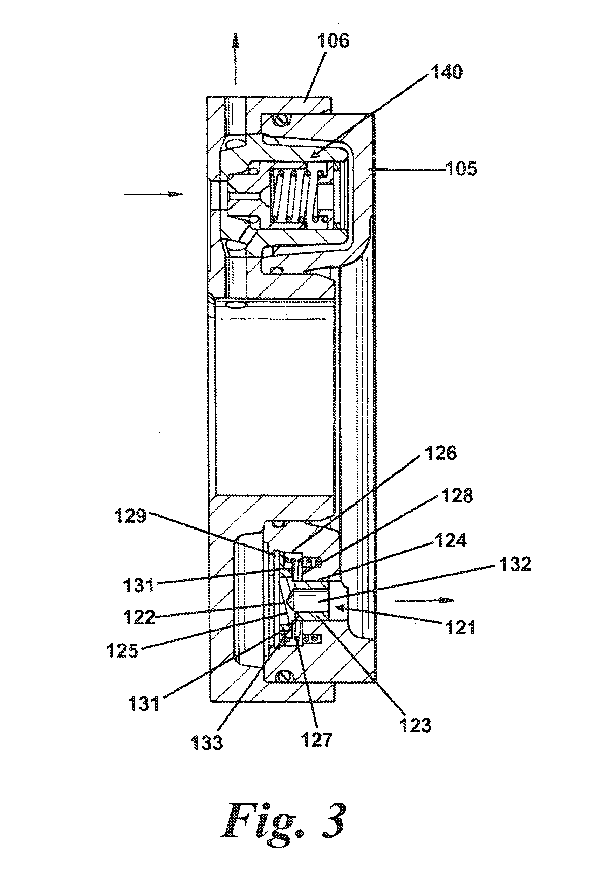

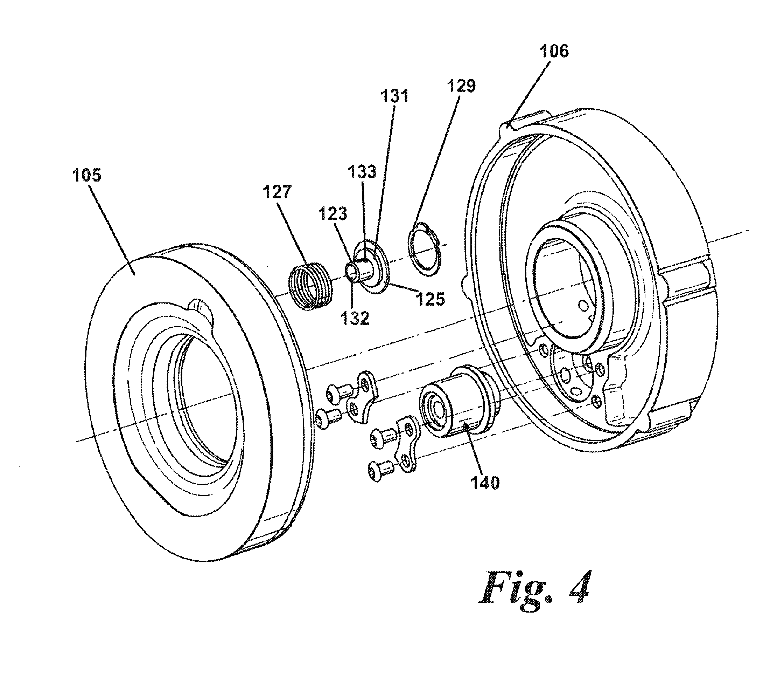

With reference to now to Figures 2 to 5, the pump 95 pumps fluid into the cylinder 106 via an axial oil inlet passageway 107 which is connected to drain via radial passageways 108, 109. The VC valve 140 comprises a cylindrical body 141 mounted in a circular aperture 110 in the rear wall of the cylinder 106 so that the oil inlet passageway 107 and the drain passageways 108, 109 are interconnected through the VC valve 140.
The valve body 141 is cup-shaped having a base 143 and a central cavity 142. The cavity 142 is connected at one end to the inlet passageway 107 via an inlet port 144 passing through said base 143 in alignment with the passageway 107.

The radial passageways 108, 109 are connected to said one end of the cavity 142 adjacent the base 143, by oil passageways 145 passing at a bias angle through the valve body. The mouth of the cavity 142 opens into the cylinder 106 so that fluid from the pump 95 passes through the valve body 141 into the cylinder 106 for actuation of the piston 105.

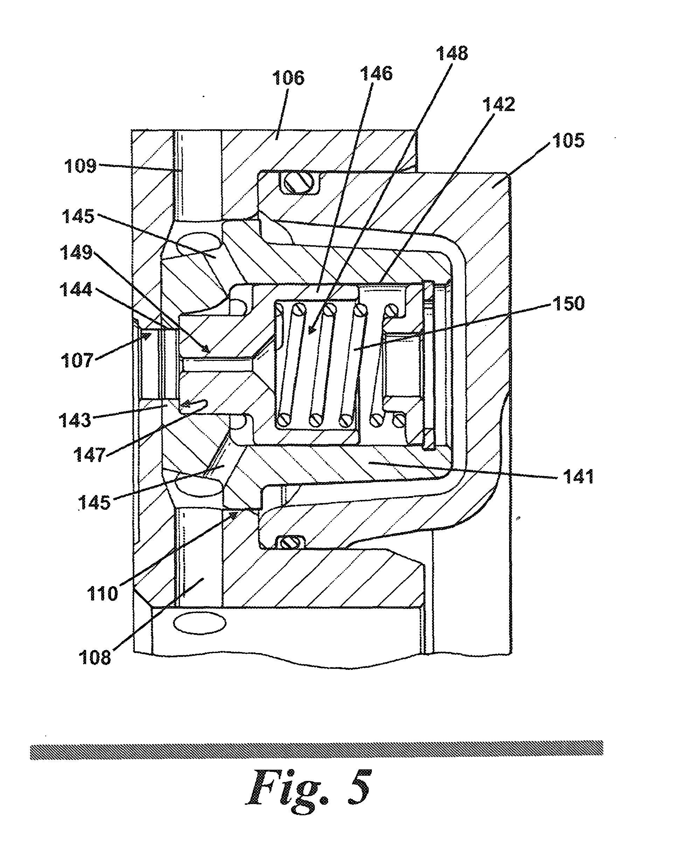

A stepped piston 146 is slidably located in the cavity 142. The piston 146 has one end face 147 which in use may seal against the base of the cavity 142 in the valve body 141 and at its other end has a cavity 148 open to mouth of the cavity 142. A small diameter fluid passageway 149 passes axially through the piston 146 to interconnect the inlet port 144 with the cavity 142. A spring 150 acts between the body 141, adjacent its mouth, and the piston 146 to bias the end face 147 of the piston 146 against the base 143 to close the passageway 144 from the passageways 145. Fluid is free to pass through the passageway 149 into the cylinder 106. The VC valve 140 is shown in Fig. 5 in the closed condition.

The pressure control valve 120 comprises a stepped bore 121 formed in the annular front wall of the piston 105. The bore 121 has a smaller diameter portion 124 and a larger diameter portion 126 with a shoulder 128 therebetween. The piston 122 is a stepped piston having a smaller diameter portion 123 slidable within the smaller diameter portion 124 of the bore 121 and a larger diameter portion 125 accommodated within the larger diameter portion 126 of the bore 121. The piston 122 is biased away from the smaller diameter portion 124 of the bore 121 by a spring 127 acting between the shoulder 128 and the larger diameter portion 125 of the piston. The movement of the piston 122 away from the smaller diameter portion 124 of the bore is limited by an abutment 129 in the form of a circlip.

The larger diameter portion 125 of the piston 122 has a plurality of axial passageways 131 connecting the front and back faces thereof. The smaller diameter portion 123 of the piston is hollow having an axially extending central passageway 132 connected to the outer surface thereof by radial passageways 133. The radial passageways are located in the smaller diameter portion at its end adjacent the larger diameter portion 125. The spring 127 biases the piston 122 rightwards into abutment with the circlip 129 as shown and this condition the valve is open.

The VC valve passageway 149 is smaller in cross-sectional area than the total cross-sectional area of the fluid passageways 131, or 133 through the pressure control valve 120 so as to ensure that the VC valve 140 is more sensitive to viscosity changes than the control valve 120. The geometry of the valve 140 is calculated to give a desired lower limit of pump speed, e.g. 25 to 40 rpm, at which the control valve 120 closes.

When the vehicle is moving in a straight line, there is no differential rotation within the pump 95 and the VC valve 140 is closed and the pressure control valve 120 is open.

If the pump 95 generates low fluid pressure, for example from a low speed differential of the type generated when turning, and the fluid is at working temperature, as the fluid flows through the passageway 149 in the piston 146, the pressure drop across the VC valve 140 is insufficient to open the VC valve and the fluid passes into the cylinder 106. At the control valve 120, the low pressure fluid passes through the passageways 131, 133, and 132 and to drain in the bottom of the housing 86. This diversion of low/medium pressure fluid prevents the operation of the actuator 104.

As the hydraulic pressure builds, during for example wheel slip, the pressure differential acting on the piston 122 eventually causes the piston 122 to move against the spring bias and seat against the shoulder 128. In this condition the shoulder 128 closes the passageways 131, and the small diameter bore 124 closes the radial passageways 133. All the pumped fluid pressure is now available for operation of the actuator. Any excess pressure may be drained through an oil pressure relieve valve (not shown) in the wall of the pump 95.

When the fluid is at a low temperature and has a higher viscosity, as the pump speed increases the pressure differential across the VC valve 140 is sufficient to open the valve 140 and allow the higher viscosity fluid to flow to drain via passageways 145 and 108, 109. This occurs before there is a sufficient pressure to close the valve 120.

As the hydraulic pressure builds, during for example wheel slip, the pressure differential acting on the piston 122 eventually causes the piston to move against the spring bias and close the valve 120 as previously described. This arrests flow through the VC valve 140 allowing the VC valve to close. When the flow of fluid to the drain is closed or choked by the control valve 120, then the fluid pressure acting in the actuator 104 rises. Any pressure relief valve (if provided) limits the upper pressure acting within the actuator.

## Claims

1. A transmission coupling (56) having a rotary input (86) and at least one rotary output (91) connected to the input through clutch means (93) located within a casing (86), the clutch means (93) being operated by a hydraulic actuator (104) having hydraulic fluid thereto delivered by a pump (95) operated by a speed differential between said input and outputs (86,91), and valve means (120, 140) controlling fluid flow through the actuator (104), **characterised in that** the valve means comprises a first valve (140) controlling fluid flow into the actuator (104) and which is biased to a closed condition, with a second valve (120) controlling fluid flow from the actuator (104) and which is biased to an open condition, each valve (120,140) being responsive to hydraulic pressure the opening or closing thereof with the first valve (140) opening before the second valve (120) closes, when the viscosity of the fluid is above a predetermined value.

2. A coupling as claimed in Claim 1, **characterised in that** the first valve (140) is operable to dump pressurized hydraulic fluid to sump or drain above a first predetermined pressure and the second valve (120) is operable to dump pressurized hydraulic fluid to sump or drain below a second predetermined pressure.

3. A coupling as claimed in Claim 1 or Claim 2, **characterised in that** the hydraulic actuator (104) comprises an annular cylinder (106) having an annular piston (105) reciprocable within the cylinder (106) and the first valve (140) is located in a wall of the cylinder (106) and the second valve (120) is located in a wall of the piston (105).

4. A coupling as claimed in any one of Claims 1 to 3, **characterised in that** the first valve (120) comprises a piston (146) slidable within a bore (142) having an inlet passageway (144) connected to the pump (95) and outlet passageways (145) connected to drain, the piston (146) preventing flow between the inlet and outlet passageways (144,145) when in the closed condition, there being at least one passageway (149) through the piston (146) to permit the flow of hydraulic fluid therethrough into the actuator.

5. A coupling as claimed in Claim 4, **characterised in that** the piston (146) has an end face (147) which closes off the inlet passageway (144) from the outlet passageways (145).

6. A coupling as claimed in any one of Claims 1 to 5, **characterised in that** the second valve (120) comprises a piston (122) slidable within a bore (121) and has passageways (131,132,133) therein to permit the flow of hydraulic fluid therethrough unless said piston (122) and bore (121) co-operate to close the passageways.

7. A coupling as claimed in Claim 6, **characterised in that** the second valve comprises a stepped diameter piston (21) housed in stepped diameter bore (122), the passageways (131-133) comprising axial passageways (131) in the larger diameter portion (125) of the piston and axial and radial passageways (132, 133) in the smaller diameter portion (123) of the piston, and flow through the passageways (131-133) is closed by the wall of the smaller diameter portion (124) of the bore.

8. A coupling as claimed in any one of Claims 1 to 7, wherein said rotary input (86) comprises the casing (86).

9. A coupling as claimed in any one of Claims 1 to 8, wherein the clutch means (93) comprises a multi-plate friction clutch and the hydraulic actuator (104) exerts a clamping load on the clutch plates.

10. A coupling as claimed in any one of Claims 1 to 9 and further including a housing (25) in which the casing (86) and rotary output (91) are rotatably mounted, an input shaft (55) is also rotatably mounted in the housing (25) to engage the casing (86), and hydraulic fluid is stored within the housing (25) for operation of the clutch means (93).

11. A vehicle final drive assembly operable between a pair of wheels (15, 16) across an axle and comprising an input shaft (55), a pair of transmission couplings (56) as claimed in any one of Claims 1 to 10, wherein the two casings (86) of said couplings (56) are rotatably connected in parallel to the input shaft (55), each coupling having its output shaft (91) rotatably connected to said input shaft (55) through the clutch means (93) and in use driving a respective wheel (15 or 16).

12. A drive assembly as claimed in claim 11, wherein the two casings (86) are interconnected by a cross shaft (89) and the input shaft (55) engages with one of said casings (86A).

13. A transmission assembly for a motor vehicle and which includes a change speed transmission (13) connectable to a vehicle engine (11), a transmission main output shaft (21) connected to a primary drive axle, and a final drive assembly as claimed in Claim 11 or Claim 12 for a secondary drive axle.

14. A motor vehicle having a final drive assembly to either a pair of front wheels or a pair of rear wheels and which is a final drive assembly as claimed in Claim 11 or Claim 12.

## Patentansprüche

1. Getriebekupplung (56) mit einem Dreheingang (86) und mindestens einem Drehausgang (91), der durch ein Kupplungsmittel (93), das sich in einem Gehäuse (86) befindet, mit dem Eingang verbunden ist, wobei das Kupplungsmittel (93) durch einen hydraulischen Aktuator (104) betätigt wird, dem durch eine Pumpe (95) Hydraulikfluid zugeführt wird, welche durch eine Drehzahldifferenz zwischen dem Eingang und den Ausgängen (86, 91) betätigt wird, und einem Ventilmittel (120, 140), das Fluidstrom durch den Aktuator (104) steuert, **dadurch gekennzeichnet, dass** das Ventilmittel ein erstes Ventil (140) umfasst, das Fluidstrom in den Aktuator (104) steuert und in einen geschlossenen Zustand vorgespannt ist, mit einem zweiten Ventil (120), das Fluidstrom von dem Aktuator (104) steuert und in einen geöffneten Zustand vorgespannt ist, wobei jedes Ventil (120, 140) für sein Öffnen oder Schließen auf hydraulischen Druck reagiert, wobei sich das erste Ventil (140) öffnet, bevor sich das zweite Ventil (120) schließt, wenn die Viskosität des Fluids über einem vorbestimmten Wert liegt.

2. Kupplung nach Anspruch 1, **dadurch gekennzeichnet, dass** das erste Ventil (140) dahingehend betätigbar ist, druckbeaufschlagtes Hydraulikfluid über einem ersten vorbestimmten Druck zu einem Sumpf oder Abfluss abzuführen, und das zweite Ventil (120) dazu betätigbar ist, druckbeaufschlagtes Hydraulikfluid unter einem zweiten vorbestimmten Druck zu einem Sumpf oder Abfluss abzuführen.

3. Kupplung nach Anspruch 1 oder 2, **dadurch gekennzeichnet, dass** der hydraulische Aktuator (104) einen ringförmigen Zylinder (106) umfasst, der einen ringförmigen Kolben (105) aufweist, der in dem Zylinder (106) hin und her bewegbar ist, und das erste Ventil (140) in einer Wand des Zylinders (106) positioniert ist und das zweite Ventil (120) in einer Wand des Kolbens (105) positioniert ist.

4. Kupplung nach einem der Ansprüche 1 bis 3, **dadurch gekennzeichnet, dass** das erste Ventil (120) einen Kolben (146) umfasst, der in einer Bohrung (142) hin und her verschiebbar ist, welche einen Einlasskanal (144), der mit der Pumpe (95) verbunden ist, und Auslasskanäle (145), die mit einem Abfluss verbunden sind, aufweist, wobei der Kolben (146), im geschlossenen Zustand, einen Strom zwischen den Einlass- und Auslasskanälen (144, 145) verhindert, wobei mindestens ein Kanal (149) durch den Kolben (146) vorhanden ist, um einen Hydraulikfluidstrom dort hindurch in den Aktuator zu gestatten.

5. Kupplung nach Anspruch 4, **dadurch gekennzeichnet, dass** der Kolben (146) eine Endfläche (147) aufweist, die den Einlasskanal (144) gegen die Auslasskanäle (145) absperrt.

6. Kupplung nach einem der Ansprüche 1 bis 5, **dadurch gekennzeichnet, dass** das zweite Ventil (120) einen Kolben (122) umfasst, der in einer Bohrung (121) hin und her verschiebbar ist und Kanäle (131, 132, 133) darin aufweist, um Hydraulikfluidstrom dort hindurch zu gestatten, es sei denn, der Kolben (122) und die Bohrung (121) wirken zusammen, um die Kanäle zu sperren.

7. Kupplung nach Anspruch 6, **dadurch gekennzeichnet, dass** das zweite Ventil einen Kolben (21) mit einem abgestuften Durchmesser umfasst, der in einer Bohrung (122) mit einem abgestuften Durchmesser untergebracht ist, wobei die Kanäle (131 - 133) axiale Kanäle (131) in dem einen größeren Durchmesser aufweisenden Teil (125) des Kolbens und axiale und radiale Kanäle (132, 133) in dem einen kleineren Durchmesser aufweisenden Teil (123) des Kolbens umfassen, und ein Durchfluss durch die Kanäle (131 - 133) durch die Wand des den kleineren Durchmesser aufweisenden Teils (124) der Bohrung gesperrt wird.

8. Kupplung nach einem der Ansprüche 1 bis 7, wobei der Dreheingang (86) das Gehäuse (86) umfasst.

9. Kupplung nach einem der Ansprüche 1 bis 8, wobei das Kupplungsmittel (93) eine Mehrscheibenreibkupplung umfasst und der hydraulische Aktuator (104) eine Klemmlast an die Kupplungsscheiben anlegt.

10. Kupplung nach einem der Ansprüche 1 bis 9, die weiterhin einen Mantel (25) enthält, in dem das Gehäuse (86) und der Drehausgang (91) drehbar angebracht sind, wobei eine Eingangswelle (55) auch drehbar im Mantel (25) angebracht ist, um das Gehäuse (86) in Eingriff zu nehmen, und Hydraulikfluid zum Betrieb des Kupplungsmittels (93) in dem Mantel (25) gespeichert ist.

11. Fahrzeugachsantriebsanordnung, die zwischen einem Paar Räder (15, 16) über eine Achse betätigbar ist und eine Eingangswelle (55) und ein Paar Getriebekupplungen (56) nach einem der Ansprüche 1 bis 10 umfasst, wobei die beiden Gehäuse (86) der Kupplungen (56) drehbar parallel zur Eingangswelle (55) verbunden sind, wobei die Ausgangswelle (91) jeder Kupplung durch das Kupplungsmittel (93) drehbar mit der Eingangswelle (55) verbunden ist und im Gebrauch ein jeweiliges Rad (15 oder 16) antreibt.

12. Antriebsanordnung nach Anspruch 11, wobei die beiden Gehäuse (86) durch eine Querwelle (89) miteinander verbunden sind und die Eingangswelle (55) eines der Gehäuse (86A) in Eingriff nimmt.

13. Getriebeanordnung für ein Kraftfahrzeug, die ein Wechselgetriebe (13), das mit einem Fahrzeugmotor (11) verbunden werden kann, eine Getriebehauptausgangswelle (21), die mit einer Primärantriebsachse verbunden ist, und eine Achsantriebsanordnung nach Anspruch 11 oder 12 für eine Sekundärantriebsachse enthält.

14. Kraftfahrzeug mit einer Achsantriebsanordnung für entweder ein Paar Vorderräder oder ein Paar Hinterräder, die eine Achsantriebsanordnung nach Anspruch 11 oder 12 ist.

## Revendications

1. Accouplement de transmission (56) ayant une entrée rotative (86) et au moins une sortie rotative (91) connectée à l'entrée par le biais d'un moyen d'embrayage (93) situé dans un carter (86), le moyen d'embrayage (93) étant actionné par un actionneur hydraulique (104) alimenté en fluide hydraulique par une pompe (95) commandée par une différence de vitesse entre ladite entrée et lesdites sorties (86, 91), et un moyen de soupape (120, 140) régulant l'écoulement de fluide à travers l'actionneur (104), **caractérisé en ce que** le moyen de soupape comprend une première soupape (140) régulant l'écoulement de fluide dans l'actionneur (104) et qui est sollicitée dans une position fermée, avec une deuxième soupape (120) régulant l'écoulement de fluide depuis l'actionneur (104) et qui est sollicitée dans une position ouverte, chaque soupape (120, 140) réagissant à la pression hydraulique pour son ouverture ou sa fermeture, la première soupape (140) s'ouvrant avant que la deuxième soupape (120) ne se ferme, quand la viscosité du fluide est au-dessus d'une valeur prédéterminée.

2. Accouplement selon la revendication 1, **caractérisé en ce que** la première soupape (140) peut être commandée pour évacuer du fluide hydraulique sous pression vers un puisard ou un drain au-dessus d'une première pression prédéterminée et la deuxième soupape (120) peut être commandée pour évacuer du fluide hydraulique sous pression vers un puisard ou un drain en dessous d'une deuxième pression prédéterminée.

3. Accouplement selon la revendication 1 ou 2, **caractérisé en ce que** l'actionneur hydraulique (104) comprend un cylindre annulaire (106) ayant un piston annulaire (105) pouvant aller et venir dans le cylindre (106) et la première soupape (140) est située dans une paroi du cylindre (106) et la deuxième soupape (120) est située dans une paroi du piston (105).

4. Accouplement selon l'une quelconque des revendications 1 à 3, **caractérisé en ce que** la première soupape (120) comprend un piston (146) pouvant coulisser dans un alésage (142) ayant un passage d'entrée (144) connecté à la pompe (95) et des passages de sortie (145) connectés au drain, le piston (146) empêchant l'écoulement entre les passages d'entrée et de sortie (144, 145) dans la position fermée, au moins un passage (149) étant prévu à travers le piston (146) pour permettre l'écoulement de fluide hydraulique à travers lui jusque dans l'actionneur.

5. Accouplement selon la revendication 4, **caractérisé en ce que** le piston (146) a une face d'extrémité (147) qui ferme la communication du passage d'entrée (144) avec les passages de sortie (145).

6. Accouplement selon l'une quelconque des revendications 1 à 5, **caractérisé en ce que** la deuxième soupape (120) comprend un piston (122) pouvant coulisser dans un alésage (121) et a des passages (131, 132, 133) à l'intérieur pour permettre le passage à travers eux de fluide hydraulique sauf si ledit piston (122) et ledit alésage (121) coopèrent pour fermer les passages.

7. Accouplement selon la revendication 6, **caractérisé en ce que** la deuxième soupape comprend un piston à diamètre étagé (21) logé dans un alésage à diamètre étagé (122), les passages (131-133) comprenant des passages axiaux (131) dans la portion de plus grand diamètre (125) du piston et des passages axial et radial (132, 133) dans la portion de plus petit diamètre (123) du piston, et l'écoulement à travers les passages (131-133) est fermé par la paroi de la portion de plus petit diamètre (124) de l'alésage.

8. Accouplement selon l'une quelconque des revendications 1 à 7, dans lequel ladite entrée rotative (86) comprend le carter (86).

9. Accouplement selon l'une quelconque des revendications 1 à 8, dans lequel le moyen d'embrayage (93) comprend un embrayage à friction multidisques et l'actionneur hydraulique (104) exerce une charge de serrage sur les disques d'embrayage.

10. Accouplement selon l'une quelconque des revendications 1 à 9 et comportant en outre un boîtier (25) dans lequel le carter (86) et la sortie rotative (91) sont montés à rotation, un arbre d'entrée (55) est également monté à rotation dans le boîtier (25) pour s'engager avec le carter (86), et du fluide hydraulique est stocké dans le boîtier (25) pour le fonctionnement du moyen d'embrayage (93).

11. Ensemble d'entraînement final d'un véhicule, pouvant fonctionner entre une paire de roues (15, 16) en travers d'un essieu et comprenant un arbre d'entrée (55), une paire d'accouplements de transmission (56) selon l'une quelconque des revendications 1 à 10, les deux carters (86) desdits accouplements (56) étant connectés à rotation en parallèle à l'arbre d'entrée (55), chaque accouplement ayant son arbre de sortie (91) connecté à rotation audit arbre d'entrée (55) par le moyen d'embrayage (93) et entraînant, pendant l'utilisation, une roue respective (15 ou 16).

12. Ensemble d'entraînement selon la revendication 11, dans lequel les deux carters (86) sont interconnectés par un arbre transversal (89) et l'arbre d'entrée (55) s'engage avec l'un desdits carters (86A).

13. Ensemble de transmission pour un véhicule à moteur comportant une transmission à changement de vitesse (13) pouvant être connectée à un moteur de véhicule (11), un arbre de sortie principal de transmission (21) connecté à un essieu d'entraînement primaire et un ensemble d'entraînement final selon la revendication 11 ou la revendication 12 pour un essieu d'entraînement secondaire.

14. Véhicule automobile ayant un ensemble d'entraînement final sur soit une paire de roues avant soit une paire de roues arrière et qui est un ensemble d'entraînement final selon la revendication 11 ou la revendication 12.
